# EUROPEAN PATENT SPECIFICATION

(11) **EP 1 864 776 B1**
(45) Date of publication and mention of the grant of the patent: **07.09.2011**
(21) Application number: 07109647.3
(22) Date of filing: 05.06.2007
(51) Int. Cl.: B29C 33/24, B29C 45/67, B29C 45/68

(54) **Hydraulic press**
Hydraulische Presse
Presse hydraulique

(30) Priority: 07.06.2006 IT BO20060445
(43) Date of publication of application: 12.12.2007
(73) Proprietor: Marinozzi, Giuseppe, 63021 Amandola (Ascoli Piceno) (IT)
(72) Inventor: Marinozzi, Giuseppe, 63021 Amandola (Ascoli Piceno) (IT)
(74) Representative: Dall'Olio, Giancarlo

(56) References cited:
- JP-A- 9 300 415
- JP-A- 2000 190 370

## Description

### DESCRIPTION OF THE INVENTION

The present invention fits into the technical field of the hydraulic presses, with particular reference to those provided for the injection moulding.

As it is known, the formation of thermoplastic polymers can take place in different modes and the processes implementing it differ the one from the other one based upon the product, or semi-finished product, which is wanted to be obtained; footwear articles, for example, are preferably implemented by means of injection moulding.

Such moulding technique consists in injecting the molten polymer into a suitable mould wherein it solidifies by compression and cooling, by assuming the shape thereof; a similar application requires hydraulic presses able to exert closing pressures onto half-moulds defining the mould, even more than hundred of tons, depending upon the polymer mass which is treated.

A simple press, of known type, provides a half-mould integral to the frame of the injection machine, a cylinder-hydraulic piston group and a stem, constrained on one side to the piston sliding inside the cylinder and on the other side to the remaining half-mould, mobile between a closing operating configuration of the two half-moulds and an opening configuration to remove the finished product and the scrap; the associated pump-engine set has a rated output depending upon the clamping pressures to be produced, therefore it very bulky and has high implementation costs. Apart from this, presses of this kind have other drawbacks which make them not suitable for applications linked to the injection moulding: in the approaching step, for example, the two half-moulds come in contact with an impact (although a control system can impose an adequate deceleration ramp to the mobile half-mould), which in the long run can cause the damage thereof. In order to save the integrity of the half-moulds and keeping into consideration the features of the hydraulic plant, as well as the inertia of the piston-stem half-mould set, it results, for this kind of press, an invalidating decay of the productive yield.

The patent EP 0.594.491 describes a press which makes use of a mechanism of the toggle type, by solving at least partially the drawbacks mentioned above. A fist half-mould is fixed, constrained to a plane integral to the frame of the machine, whereas the other one, sliding onto guiding columns integral to the frame too, is moved by a double toggle between an opening configuration of the mould and a closing configuration; the double toggle on one side is joined to a mobile plane; the second half-mould thereof is an integral portion, on the other side it is joined to a set comprising a locking piston which can slide inside the fixed cylinder. During the press operation, the locking piston is fixed and it assumes a position, inside the related cylinder, which depends upon the type and the sizes of the half-moulds so as to guarantee the suitable closing of the latter until the double toggle is completely extended. A closing piston, in turn, is actuated hydraulically to slide inside a cylindrical chamber, obtained in the locking piston and coaxial thereto; such piston is constrained to a joined mechanism acting onto the double toggle, to allow the extension (half-moulds in closing configuration) and the folding (half-moulds in opening configuration) of the double toggle itself.

The above technical solution has the advantage to adapt in versatile way to the production type, as the injection machine fits easily to the format change of the half-moulds, previous "recording" of the position assumed by the locking piston inside the fixed cylinder.

The double toggle appears like a "force amplifier" since it is able to develop very high clamping pressures, requesting a limited energy expenditure; furthermore the intrinsic features thereof allow high closing and opening speeds of the half-moulds, allowing a greater productive yield with respect to the previously described technical solution.

Document JP 2000 190370 discloses a hydraulic press according to the preamble of claim 1, which comprises a mold clamping block equipped with a mold clamping cylinder operating the mold clamping ram connected to a movable die plate and a mold opening and closing servo motor moving means is connected to the mold clamping block and a pressure intensifying cylinder is provided in the mold clamping ram coaxially and one end of the piston rod inserted into the intensifying cylinder to be arranged therein is connected to the outer surface of the mold clamping cylinder so as to be allowed to relatively advance and retreat by a required drive means. Further, a hydraulic circuit equipped with a changeover valve allowing the oil chambers of the intensifying cylinder and the oil chambers of the mold clamping cylinder to communicate with each other and selectively blocking one of or both of the oil chambers of the mold clamping cylinder or allowing the same to communicate with a tank is provided to constitute a mold clamping mechanism.

The object of the present invention is to propose an hydraulic press of new conception able to solve the drawbacks of the first described solution; in this sense, therefore, one wishes to show a press which: imposes high clamping pressures with a reduced energy consumption, has a high hourly productivity, fits easily to format changes of the moulds and is reliable and long-lasting.

Another object of the present invention is to propose a press wherein the closing force is adjustable in an easy and continuous way, according to values programmable by means of a control unit.

An additional object of the invention is to propose an hydraulic press allowing to determine the closing force of the related half-moulds based upon the specific requests. The above-mentioned objects are reached in accordance to the claims' content.

The features of the invention, not emerging from what just said, will be better underlined hereinafter, according to what reported in the claims and with the help of the enclosed drawings, wherein:
- figures 1, 2, 3, 4 show front and schematic views of the subject press, according to as many operating phases;
- figure 5 shows a front and schematic view of a press, which is not part of the invention.

By referring to the enclosed figures, a cylinder-piston group has been generally designated with 5, detecting a first chamber 8; the head of the related cylinder 11 bears a coaxial through hole 10, wherein a stem 9 is destined to slide tightly and a side hole 26 which puts into communication, through a duct 37, the first chamber 8 with a tank 7 containing the liquid 18, for example a mineral oil. The associated piston 6, instead, has the outer head 6a supporting a mobile press plane 4 and shapes on the inside a second chamber 17, localized between the same outer head 6a and a crosspiece 34 belonging to the piston 6 itself; such outer head 6a is equipped with a second side hole 27 which puts into communication, through a second duct 28, the second chamber 17 with the tank 7, whereas the crosspiece 34 bears a coaxial through hole 16, wherein the stem 9 is destined to slide tightly.

In the illustrated example, the tank 7 identifies in the chamber 29 (communicating with the duct 37) of a cylinder 30, inside thereof the liquid 18 is kept at a given pressure by the action exerted by a related piston 35, in turn subjected to a fluid, such as air, acting onto the other chamber 36.

A fixed press plane 3 results to be constrained to the frame of said press, not shown as known, and it bears for example a first half-mould 1; the latter, in the provided operating configurations, is destined to couple with a second half-mould 2, constrained to the already mentioned mobile press plane 4.

Members 14 are functionally interposed between the first chamber 8 and the tank 7 and they are apt to obstruct the passage of the liquid 18 towards the first chamber 8 or to allow the inflow and the downflow into and from the same first chamber 8: for example, they are constituted by a unidirectional valve 14a which allows the inflow of the liquid 18 in the first chamber 8, interlocked to a deactivating actuator 14b of the valve 14a itself, for the passage of the liquid 18 in both directions.

Furthermore, also adjusting members 19 are provided, functionally interposed between the second chamber 17 and the tank 7, destined to keep the pressure of the liquid 18 contained inside the second chamber 17 at a pre-established value (for example equal to 20 Bar); in the illustrated example such members 19 identify in a second unidirectional valve 19a which allows the inflow of the liquid 18 from the tank 7 towards the second chamber 17 and in a valve of maximum pressure 19b connected thereto in parallel.

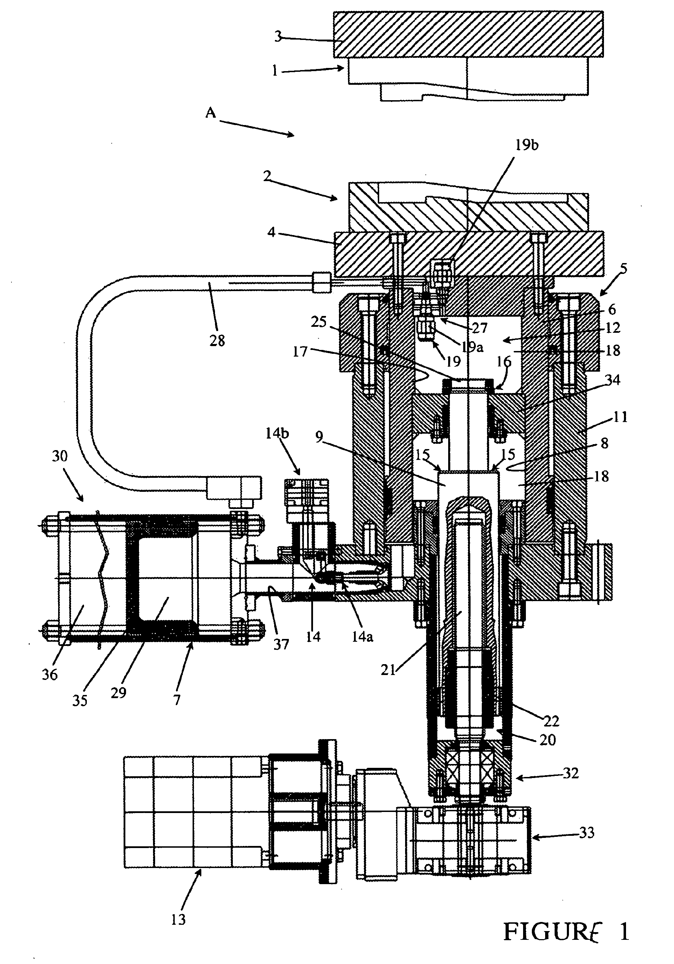

The stem 9, as said, slides tightly in the through holes 10, 16 respectively made in the cylinder 11 and in the crosspiece 34, thus involving the first chamber 8 and the second chamber 17 inside thereof it ends with a cap 25; the stem 9 is characterized by a cylindrical geometry and it is equipped with a shoulder 15 defining a section narrowing towards the cap 25. Such shoulder 15 is destined to remain, in the previous operating configurations, inside the first chamber 8 (see figures 1, 2, 3, 4).

On the opposite end, the stem 9 forms a longitudinal recess 31 and bears a nut 22, constrained to the walls of the recess 31 itself, by coupling with a screw 21 coaxial thereto and with a smaller diameter with respect to the one of the recess 31. Such screw 21 is supported by a thrust bearing 32 and dragged into rotation by a motor 13, for example, of the stepping type or brush-less type, by functional interposition of reduction unit with angular speed 33.

The screw 21-nut coupling 22 defines means 20 for converting the motion from rotary (of the screw 21) into translating motion (of the stem 9).

The operation of the press subject of the present invention will be now described.

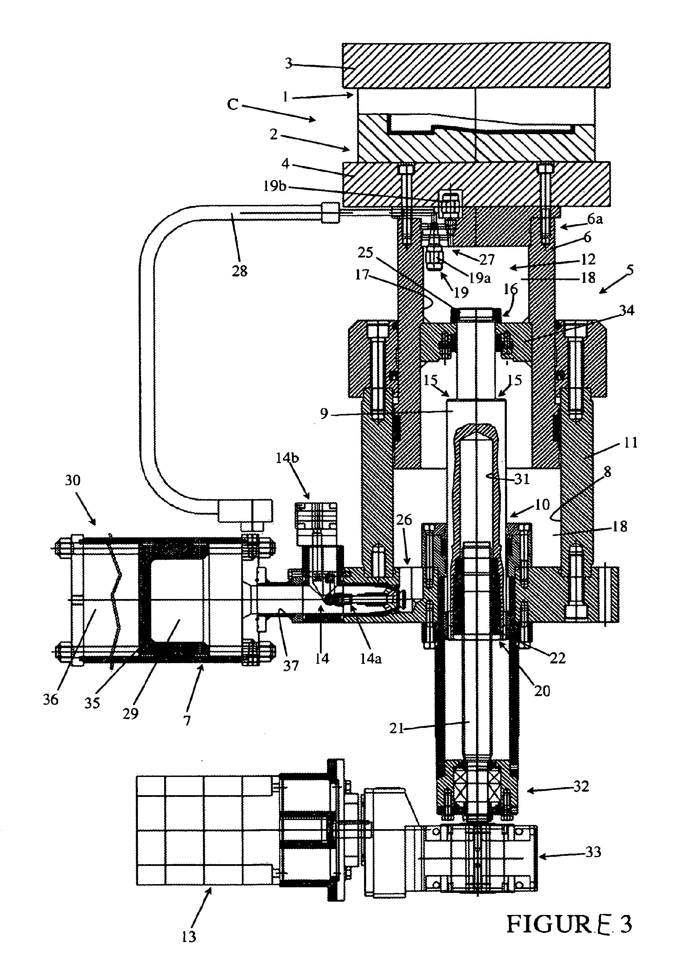

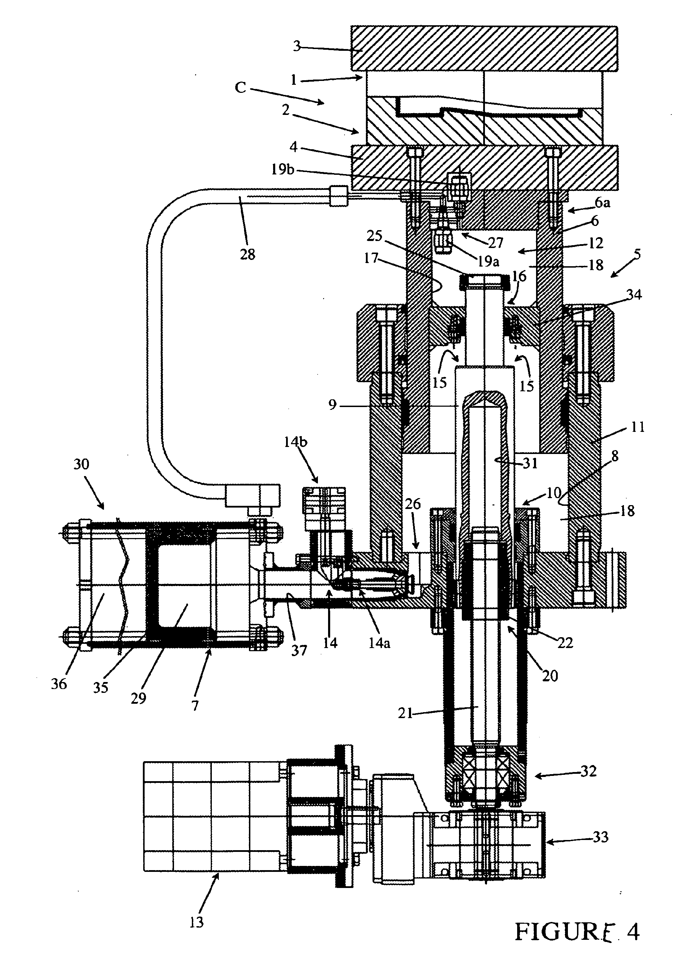

The subject press is destined to operate cyclically between an opening configuration A of the first 1 and the second 2 half-mould, see figure 1, and a closing configuration C of the same, shown in the figures 3, 4; hereinafter, then, a general operating cycle will be described.

The motor 13 is equipped with a not illustrated central unit, which controls the activation thereof by controlling the number of steps thereby the shaft rotates; in this way it is possible to date back with precision to the exact position assumed by the stem 9, considering the presence of the reduction unit 33 and of the screw 21-nut coupling 22, as there is a univocal relationship between a given number of elementary rotations of the driving shaft and the corresponding translation of the stem 9.

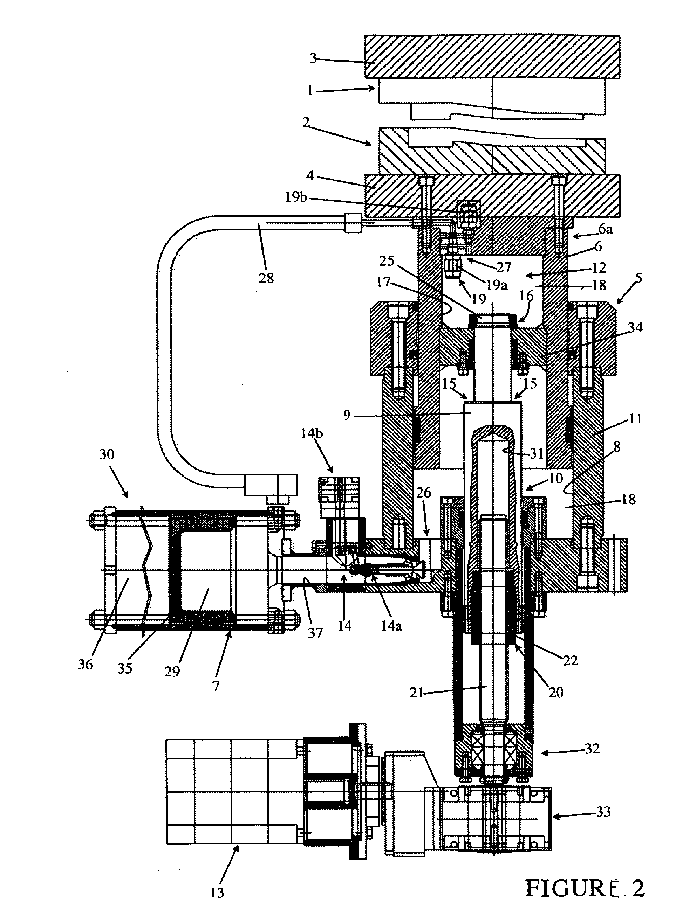

In the opening configuration A of the first half-mould 1 and second half-mould 2 (figure 1) the unidirectional valve 14a is active, with the pressure of the liquid 18 inside the tank 7 coincident to that of the liquid 18 in the first chamber 8 and the cap 25 of the stem 9 finds corresponding surface portions of the second chamber 17. The actuation of the stem 9 causes a decrease in the useful volume in the second chamber 17, with consequent raising of the pressure of the liquid 18 contained therein; however, this increase in pressure is lower than the value of maximum pressure recorded in the related valve 19b and it generates a distributed force, onto the walls of the second chamber 17, the axial resultant thereof determines an advancement of the piston 6 synchronous to that of the stem 9 (figure 2) until obtaining the closing configuration C of the first half-mould 1 and second half-mould 2 (see figure 3). The sliding of the piston 6 inside the cylinder 11 determines an increase in the volume defining the first chamber 8, therefore an inflow of the liquid 18 from the tank 7 inside the latter takes place, which keeps always constant the pressure value thereof.

The just described phase, wherein the stem 9 is moved to bring the first half-mould 1 and second half-mould 2 from the opening configuration A into the closing configuration B, can be adjusted by the central unit in several ways: knowing the relationship between range of the stem 9 and relative number of steps thereby the driving shaft must rotate allows imposing a speed profile, for example, characterized by an approaching of the second half-mould 2 at high speed, followed by a deceleration ramp which allows the "soft" contact with the first half-mould 1, defining the closing configuration C.

At this point, with the two half-moulds 1, 2 in the closing configuration C in figure 3, the stem 9 is again actuated, the relative advancement thereof with respect to the piston 6 (see figure 4) is justified in order to compressibility of the liquid 18 contained inside the first chamber 8, not being allowed any downflow way (active valve 14a): in fact, an overall increase in the volume portion of the stem 9 takes place, involving the first chamber 8 and a consequent increase in pressure of the liquid 18 contained therein.

The shoulder 15, as said, demarcates cross-sections of the stem 9 at different area, although the related values are slightly different therebetween; considering this and for the Pascal principle, then, high increases in pressure of the liquid 18 contained inside the first chamber 8 can be obtained, with relatively low energy costs by the motor 13. Such increase in pressure causes a force distributed onto the walls of the first chamber 8, the axial resultant thereof, acting onto the piston 6, substantially defines the force therewith the two half-moulds 1, 2 are clamped, for example during the compression and cooling phase of a melt polymer contained therein (injection moulding).

The force increase therewith the stem 9 itself must be actuated depends, in prevailing way, upon the product of the active surface of the shoulder 15 for the increase in pressure which is wanted to be obtained; to this purpose, a pressure sensor, not shown and connected to the central unit, could be provided inside the first chamber 8 with the aim of making possible the modulation of the closing force of the two half-moulds 1, 2.

During the above-described phase for clamping the two half-moulds 1, 2, the stem 9 has indeed a related sliding with respect to the piston 6 (compare the figures 3, 4) which determines an increase in pressure of the liquid 18 inside the second chamber 17 with consequent intervention of the valve of maximum pressure 19b and related downflow in the tank 7. The liquid 8 contained inside the second chamber 17, then, identifies equivalently in elastic members 12 interposed between the cap 25 and the opposite wall of the second chamber 17 itself.

The reduced energy cost is to be ascribed to the force, opposed to the advancement of the stem 9, acting onto the cap 25, precisely given by the product of the pressure of the liquid 18 contained inside the second chamber 17 for the cross surface section of the stem 9 underneath the cap 25.

Once ended the clamping phase of the two half-moulds 1, 2, the stem 9 is made to move back; during the sliding of the stem 9 with respect to the piston 6, until intercepting the cap 25 with the corresponding wall of the second chamber 17, the pressure inside the latter decreases and the liquid 18 contained inside the tank 7 flows therein through the second unidirectional valve 19a.

Subsequently, once the deactivation of the unidirectional valve 14a has taken place, the stem 9 drags the piston 6, indeed by interception of the cap 25 with the corresponding wall of the second chamber 17 and the liquid 18 contained in the first camber 8 can downflow into the tank 7, until obtaining the opening configuration A of the first half-mould 1 and the second half-mould 2 (figure 1), thereat the unidirectional valve 14a is activated and a new operative cycle starts. The return motion of the stem 9 is indeed concomitant with the downflow of the liquid 18 from the first chamber 8 towards the tank 7, due to the difference in pressure thereto the liquid 18 contained inside the latter two is subjected; advantageously, this allows obtaining a quick withdrawal of the stem 9 from the closing configuration C to the opening one A of the two half-moulds 1, 2. In more general terms, a particularly contained cycle time results then, which reflects in a high hourly productivity of the subject press.

The univocal correspondence between number of rotations made by the driving shaft and a given translation of the stem 9 allows the use of half-moulds of any format; in fact, during a format change it is possible providing a phase for adjusting the range of the stem 9 upon passing from the opening configuration A to the closing configuration C of the two half-moulds 1, 2, for example until the mutual contact thereof (figure 3); this phase allows the operator to pre-arrange the central unit (for example, by means of a relative panel) so as to control the end approaching of the second half-mould 2 to the first half-mould 1 (proximate the contact thereof) with an adequate deceleration ramp. This has several advantages: it makes the press extremely versatile as far as the format change of the half-moulds is concerned and it allows setting a speed profile which allows, on one side, a contact without impacts of the two half-moulds 1, 2 and, on the other one, an optimum configuration of the recalled speed profile, aimed at increasing the productivity.

The present invention, in view of what described above, wholly meets the pre-fixed objects, further resulting to have relatively reduced sizes and costs, compared to the known solutions.

An additional advantage of the invention lies in the fact of being able to modulate, for example according to given productive specifications, the closing force of the two half-moulds: in fact, in this sense it is possible providing a sensor inside the first chamber 8 or obtained onto the active surface (that is the one involved by the thermoplastic material, in case of injection moulding) of one of the two half-moulds 1, 2; the central unit, thereto the sensor is connected, will control the rotation of the driving motor until obtaining the wished pressure value inside the first chamber 8 or of the mould. The value therewith the clamping of the two half-moulds 1, 2 must take place can be set by an operator by means a specific control panel existing onto the control central unit, for example.

An additional advantage of the invention lies in the fact of having defined an hydraulic press with relatively reduces sizes and costs.

A possible embodiment variation can provide, instead of the liquid 18 contained inside the second chamber 17, elastic members of another nature, such as a spring with pre-established stiffness, for example. As second possibility, it is possible replacing the set constituted by the second chamber 17, the adjustment members 19 and the second duct 28 with a hole wherein the end portion of the stem 9 is destined to slide tightly in counteraction to related elastic members; furthermore, an adequate projection of the stem 9 would couple with a groove provided in the mentioned hole, to allow dragging the piston 6 during the related return inside the cylinder 11.

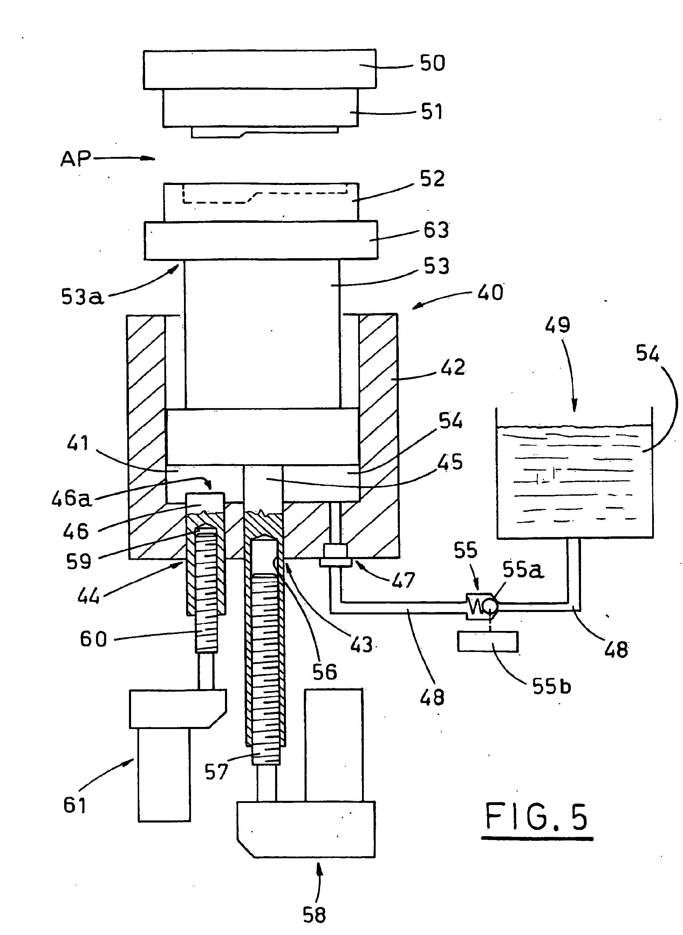

An example, schematically represented in figure 5, provides a cylinder-piston group 40, detecting a chamber 41; the head of the relative cylinder 42 bears a side hole 47, which through a duct 48 puts the chamber 41 in communication with a tank 49 and two through holes 43, 44 the one coaxial and the other one lateral, wherein respectively a stem 45 and an interference member 46, for example a cylindrical member and with limited cross area, slide tightly.

A fixed press plane 50 results to be constrained to the frame of the press and bears, for example, a first half-mould 51; the latter, in the provided operating configurations, is destined to couple with a second half-mould 52 constrained to a mobile press plane 63, which in turn is supported by the head 53a of the piston 53.

In the illustrated example the tank 49, communicating with the duct 48, includes a liquid 54 at the atmospheric pressure.

Members 55 are functionally interposed between the chamber 41 and the tank 49 and they are apt to obstruct the passage of the liquid 54, or to allow the inflow and the downflow into and from the chamber 41; for example, they are constituted by a unidirectional valve 55a, which allows the inflow of the liquid 54 into the chamber 41, interlocked to an actuator 55b for deactivating the valve 55a itself, for the passage of the liquid 54 in the two directions.

The stem 45, as said sliding tightly into the coaxial through hole 43, on one side is constrained to the piston 53, being destined to move it, and on the other side it forms a threaded longitudinal recess 53, coupling with a first screw 57 dragged into rotation by a first motor 58, for example of the stepping type. Analogously, the interference member 46, sliding tightly into the side through hole 44, forms at the outer end a threaded longitudinal recess 59, coupling with a second screw 60 dragged into rotation by a second motor 61, for example of the stepping type. The couplings first screw 57-threaded recess 56 and second screw 60-threaded recess 59 define corresponding means for converting the motion from rotary (respectively of the first screw 57 and second screw 60) into translatory (of the stem 45 and of the interference member 46).

The press according to such example, as represented in figure 5, operates cyclically between an opening configuration AP and a closing configuration of the first half-mould 51 and the second half-mould 52 (not represented in the enclosed drawings).

The first motor 58 and second motor 61 are interlocked to a not shown central unit, which controls the activation thereof by controlling the number of steps thereby the respective shafts rotate; in this manner, it is possible to trace back with precision to the exact position assumed by the stem 45 and by the interference member 46, having considered the above-mentioned couplings screw-nut screw, existing a univocal relationship between a given number of elementary rotations of the driving shafts and the corresponding translations of the stem 45 and of the interference member 46.

In the opening configuration AP of the two half-moulds 51, 52 (figure 5) the unidirectional valve 55a is active, with the pressure of the liquid 54 inside the tank 49 coincident to that of the liquid 54 in the chamber 41, whereas the interference member 46 is inactive, for example skimming the inner surface of the cylinder 42. The actuation of the stem 45, by the first motor 58, determines an increase in volume of the chamber 41 and a corresponding decrease in pressure of the liquid 54 contained therein, which leads to an inflow of liquid 54 from the tank 49. The central unit controls the activation of the first motor 58 so that the piston 53 has a speed profile characterized, during the phase of approaching the second half-mould 52 to the first one 51, for example by a deceleration ramp, to allow a contact without impacts between the latter two.

Subsequently, with the two half-moulds 51, 52 in the closing configuration (or with mutual contact) a second motor 61 is activated for advancing the interference member 46 towards the inside of the chamber 41, until detecting a pre-established depth with respect to the head of the cylinder 42: such advancement is justified in order to compressibility of the liquid 54 contained inside the chamber 41, not being allowed any way of downflow (active valve 55a); the consequent increase in pressure of the liquid 54 inside the chamber 41 causes a force distributed onto the walls of the latter, the axial resultant thereof, acting onto the piston 53, defines the force therewith the two half-moulds 51, 52 are clamped. The corresponding force therewith the interference member 46 must be moved is given by the product of the active surface 46a of the member 46 itself (outer cross section in contact with the liquid 54) for the increase in pressure which is wanted to be obtained inside the chamber 41; the area's low value ascribable to the active surface 46a allows to define high pressure values of the liquid 54 inside the chamber 41, with reduced energy costs for the second motor 61.

Once ended the phase for clamping the two half-moulds 51, 52, the interference member is made to go back, the unidirectional valve 55a is deactivated and the stem 45 is made to go back too until obtaining the opening configuration AP of the two half-moulds 51, 52 with consequent downflow of the liquid 54 from the chamber 41 into the tank 49.

As in case of the press described above, this example allows reduced energy costs, in front of the definition of a high force for clamping the two half-moulds, the use of half-moulds of any format and the modulation of the force for clamping the two half-moulds 51, 52 according to given productive specifications.

## Claims

1. Hydraulic press comprising:
a fixed press plane (3) and a mobile press plane (4), opposed to the previous one;
a cylinder-piston group (5), with the outer head (6a) of said piston (6) supporting the mentioned mobile press plane (4);
a tank (7) containing a first liquid (18), provided for feeding the first chamber (8) defined by the above-mentioned cylinder-piston (5) group;
a hole (16) involved in the wall of the mentioned piston (6), the wall concurring to define the above-mentioned first chamber (8);
a stem (9), sliding tightly into a through hole (10) obtained in the head of said cylinder (11) and coaxial thereto and sliding tightly through the mentioned hole (16) involved in the wall of the mentioned piston (6);
elastic means (12) interposed between the top side of the stem (9) and an abutment surface provided in the piston (6) itself, the stem (9) being actuated by actuator means (13) for moving the same piston 6 between an opening configuration (A) and a closing configuration (C) of the above-mentioned fixed press plane (3) and mobile press plane (4), as well as for the related translation thereof with respect to the above-mentioned piston (6) after the obtaining of the above-mentioned closing configuration (C), in counteraction to the mentioned elastic means (12);
members (14), functionally interposed between said first chamber (8) and tank (7), apt to allow the inflow and the downflow of the mentioned first liquid (18) into and from the first chamber (8) in phase relationship with the translation of the above-mentioned piston (6);
**characterized in that**
the members (14) are apt to obstruct the passage thereof when the mentioned fixed press plane (3) and mobile press plane (4) have obtained said closing configuration (C),
and **in that** it provides:
compression means (15) identifying in at least a corresponding portion of the mentioned stem (9) having greater area sections than the remaining portion of the same stem (9), so that an increase in pressure of the mentioned first liquid (18) contained inside the above-mentioned first chamber (8) corresponds to the relative translation of said stem (9) with respect to the above-mentioned piston (6), the compression means (15) being destined, consequently to the obstruction of the passage of the mentioned first liquid (18) between said first chamber (8) and tank (7) by the members (14) and to the above-mentioned related translation of the mentioned stem (9) with respect to said piston (6), in counteraction to the mentioned elastic means (12), to define an increase in pressure of the mentioned first liquid (18) contained inside the above-mentioned first chamber (8) after obtaining the above-mentioned closing configuration (C) by said fixed press plane (3) and mobile press plane (4).

2. Press according to claim 1,
**characterized in that**
said wall, together with the above-mentioned outer head (6a) of the mentioned piston (6), detects a second chamber (17) wherein the above-mentioned hole (16) flows and
**in that**
said elastic means (12) are interposed between the free side of the mentioned stem (9) and the inner surface of the above mentioned head (6a).

3. Press according to claim 2,
**characterized in that**
the mentioned elastic means (12) identifies in a fluid contained inside said second chamber (17), the relative translation of the mentioned stem (9) with respect to said piston (6), after obtaining the mentioned closing configuration (C) by the above-mentioned fixed press plane (3) and mobile press plane (4), taking place in elastic counteraction to the consequent increase in pressure of the mentioned fluid inside the above-mentioned second chamber (17).

4. Press according to claim 2,
**characterized in that**
the mentioned elastic means (12) identifies in a fluid contained inside said second chamber (17) and fed by a second tank
and **in that**
it provides adjusting members (19) functionally interposed between said second chamber (17) and second tank, apt to keep the pressure of the mentioned liquid contained inside the second chamber (17) at a preestablished value, the related translation of the mentioned stem (9) with respect to said piston (6), after obtaining the mentioned closing configuration (C) by the above-mentioned fixed press plane (3) and mobile press plane (4), taking place in counteraction to the pressure force performed by the mentioned fluid inside the above-mentioned second chamber (17).

5. Press according to claim 4,
**characterized in that**
the above-mentioned tank (7) and second tank coincide.

6. Press according to claim 4 or 5,
**characterized in that**
the mentioned stem (9) on the upper side is equipped with a cap (25), destined to abut corresponding portions of lower surface of the mentioned second chamber (17), with consequent dragging of the mentioned piston (6).

7. Press according to claim 1,
**characterized in that**
the mentioned compression means (15) identifies in at least a shoulder provided in the above-mentioned stem (9) so as to detect cross sections with different area, so that an increase in pressure of the mentioned first liquid (18) contained inside the above-mentioned first chamber (8) corresponds to the relative translation of said stem (9) with respect to the above-mentioned piston (6), after obtaining the above-mentioned closing configuration (C) by said fixed press plane (3) and mobile press plane (4).

8. Press according to claim 1,
**characterized in that**
the mentioned actuator means (13) identifies in a motor of the brushless type and
**in that**
means (20) are provided, functionally interposed between said motor (13) and stem (9), apt to convert the motion applied to the latter from rotary into translatory.

9. Press according to claim 8,
**characterized in that**
the mentioned means (20) for converting the motion identifies in a screw (21), dragged into rotation by the mentioned motor (13), and by a nut (22) therewith it couples, constrained to the mentioned stem (9).

10. Press according to claim 1,
**characterized in that**
the above-mentioned wall belongs to the above-mentioned outer head (6a) of the piston (6) itself.

## Patentansprüche

1. Hydraulische Presse, Folgendes beinhaltend:
eine feste Pressenplatte (3) und eine bewegliche Pressenplatte (4), die gegenüber der vorher genannten angeordnet ist;
eine Zylinder-Kolben-Gruppe (5), worin der äußere Kopf (6a) des Kolbens (6) die bewegliche Pressenplatte (4) trägt;
einen Tank (7), der eine erste Flüssigkeit (18) enthält, die zur Beschickung der ersten Kammer (8) dient, welche durch die oben genannte Zylinder-Kolben-Gruppe (5) definiert wird;
eine Bohrung (16), die in der Wand des Kolbens (6) enthalten ist, wobei diese Wand zur Definition der ersten Kammer (8) beiträgt;
einen Schaft (9), der eng anliegend in einer Durchgangsbohrung (10) gleitet, die im Kopf des Zylinders (11) und koaxial dazu angefertigt ist, und der eng anliegend durch die genannte Bohrung (16) gleitet, die in der Wand des Kolbens (6) enthalten ist;
elastische Mittel (12), die zwischen der Oberseite des Schaftes (9) und einer im Kolben (6) selbst vorgesehenen Anschlagfläche angeordnet sind, wobei der Schaft (9) durch Stellantriebsmittel (13) betätigt wird, die sowohl für die Bewegung des Kolbens (6) zwischen einer Öffnungskonfiguration (A) und einer Schließkonfiguration (C) der festen Pressenplatte (3) und beweglichen Pressenplatte (4) dienen, als auch für die entsprechende Translationsbewegung im Verhältnis zu dem Kolben (6) nach Erreichen der genannten Schließkonfiguration (C), in Gegenwirkung zu den elastischen Mitteln (12);
Elemente (14), die funktional zwischen der ersten Kammer (8) und dem Tank (7) angeordnet sind und dafür ausgelegt sind, das Einfließen und Abfließen der ersten Flüssigkeit (18) in und aus der ersten Kammer (8) in Phasenbeziehung zu der Translationsbewegung des Kolbens (6) zu ermöglichen;
**dadurch gekennzeichnet, dass**
die Elemente (14) dafür ausgelegt sind, den Durchgang zu hemmen, wenn die feste Pressenplatte (3) und die bewegliche Pressenplatte (4) die Schließkonfiguration (C) erreicht haben,
und **dadurch**, dass sie ferner bereitstellt:
Kompressionsmittel (15), die in zumindest einem entsprechenden Abschnitt des Schaftes (9) bestehen, der einen größeren Flächenquerschnitt als der restliche Abschnitt des Schaftes (9) aufweist, so dass eine Druckerhöhung der in der ersten Kammer (8) enthaltenen ersten Flüssigkeit (18) der relativen Translationsbewegung des Schaftes (9) im Verhältnis zu dem Kolben (6) entspricht, wobei die Kompressionsmittel (15) demzufolge vorgesehen sind für die Hemmung des Durchflusses der ersten Flüssigkeit (18) zwischen der ersten Kammer (8) und dem Tank (7) durch die Elemente (14), und für die entsprechende Translationsbewegung des Schaftes (9) im Verhältnis zu dem Kolben (6), in Gegenwirkung zu den elastischen Mitteln (12), um eine Druckerhöhung der in der ersten Kammer (8) enthaltenen ersten Flüssigkeit (18) zu bewirken, nachdem die feste Pressenplatte (3) und die bewegliche Pressenplatte (4) die Schließkonfiguration (C) erreicht haben.

2. Presse nach Anspruch 1,
**dadurch gekennzeichnet, dass**
die genannte Wand, zusammen mit dem äußeren Kopf (6a) des Kolbens (6), eine zweite Kammer (17) identifizieren, in welche die genannte Bohrung (16) einmündet,
und **dadurch**, dass
die elastischen Mittel (12) zwischen der freien Seite des Schaftes (9) und der inneren Oberfläche des Kolbenkopfes (6a) angeordnet sind.

3. Presse nach Anspruch 2,
**dadurch gekennzeichnet, dass**
die elastischen Mittel (12) in einem Fluid bestehen, das in der zweiten Kammer (17) enthalten ist, wobei die relative Translationsbewegung des Schaftes (9) im Verhältnis zu dem Kolben (6), nachdem die feste Pressenplatte (3) und die bewegliche Pressenplatte (4) die Schließkonfiguration (C) erreicht haben, in elastischer Gegenwirkung zu der daraus folgenden Druckerhöhung des Fluids in der zweiten Kammer (17) erfolgt.

4. Presse nach Anspruch 2,
**dadurch gekennzeichnet, dass**
die elastischen Mittel (12) in einem Fluid bestehen, das in der zweiten Kammer (17) enthalten ist und durch einen zweiten Tank zugeführt wird,
und **dadurch**, dass
sie Einstellelemente (19) bereitstellt, die funktional zwischen der zweiten Kammer (17) und dem zweiten Tank angeordnet sind und dazu dienen, den Druck der in der zweiten Kammer (17) enthaltenen Flüssigkeit auf einem vorgegebenen Wert zu halten, wobei die entsprechende Translationsbewegung des Schaftes (9) im Verhältnis zu dem Kolben (6), nachdem die feste Pressenplatte (3) und die bewegliche Pressenplatte (4) die Schließkonfiguration (C) erreicht haben, in Gegenwirkung zu der Druckkraft erfolgt, welche das Fluid in der zweiten Kammer (17) ausübt.

5. Presse nach Anspruch 4,
**dadurch gekennzeichnet, dass**
der Tank (7) und der zweite Tank miteinander übereinstimmen.

6. Presse nach Anspruch 4 oder 5,
**dadurch gekennzeichnet, dass**
der Schaft (9) auf der Oberseite mit einer Kappe (25) versehen ist, die dazu bestimmt ist, an entsprechende Abschnitte der unteren Oberfläche der zweiten Kammer (17) anzuschlagen und somit den Kolben (6) mitzunehmen.

7. Presse nach Anspruch 1,
**dadurch gekennzeichnet, dass**
die Kompressionsmittel (15) in zumindest einem Absatz bestehen, der in dem Schaft (9) vorgesehen ist, um Querschnitte von unterschiedlicher Fläche zu identifizieren, so dass eine Druckerhöhung der in der ersten Kammer (8) enthaltenen ersten Flüssigkeit (18) der relativen Translationsbewegung des Schaftes (9) im Verhältnis zu dem Kolben (6) entspricht, nachdem die feste Pressenplatte (3) und die bewegliche Pressenplatte (4) die Schließkonfiguration (C) erreicht haben.

8. Presse nach Anspruch 1,
**dadurch gekennzeichnet, dass**
die Stellantriebsmittel (13) in einem bürstenlosen Motor bestehen,
und **dadurch**, dass
Mittel (20) bereitgestellt sind, die funktional zwischen dem Motor (13) und dem Schaft (9) angeordnet sind und dazu dienen, die auf letztgenannten angewandte Bewegung von einer rotatorischen in eine translatorische Bewegung umzuwandeln.

9. Presse nach Anspruch 8,
**dadurch gekennzeichnet, dass**
die Mittel (20) zur Bewegungsumwandlung in einer Schraube (21) bestehen, die von dem Motor (13) mitgenommen und in Drehung versetzt wird, und einer damit gekoppelten Mutter (22), die an dem Schaft (9) befestigt ist.

10. Presse nach Anspruch 1,
**dadurch gekennzeichnet, dass**
die genannte Wand Bestandteil des äußeren Kopfes (6a) des Kolbens (6) ist.

## Revendications

1. Une presse hydraulique comprenant:
un plan de pression fixe (3) et un plan de pression mobile (4) opposé au précédent;
un groupe cylindre-piston (5), la tête externe (6a) dudit piston (6) supportant ledit plan de pression mobile (4) ;
un réservoir (7) contenant un premier fluide (18), pour l'alimentation de la première chambre (8) définie par ledit groupe cylindre-piston (5);
un trou (16) pratiqué dans la paroi dudit piston (6), laquelle contribue à la définition de ladite première chambre (8);
une tige (9), coulissant sans jeu à l'intérieur d'un trou débouchant (10) obtenu dans la tête dudit cylindre (11) en position coaxiale, et coulissant dans ledit trou (16) pratiqué dans la paroi dudit piston (6);
des moyens élastiques (12) situés entre l'extrémité supérieure de la tige (9) et une surface de butée obtenue dans le piston (6), ladite tige (9) étant actionnée par des moyens d'actionnement (13) afin de déplacer ledit piston (6) entre une position d'ouverture (A) et une position de fermeture (C) du plan de pression fixe (3) et du plan de pression mobile (4) susmentionnés, et afin d'imprimer un mouvement de translation par rapport audit piston (6) après l'arrivée dans ladite position de fermeture (C), en contraste avec lesdits moyens élastiques (12);
des membres (14), situés dans une position fonctionnelle entre ladite première chambre (8) et le réservoir (7), permettant l'écoulement dudit premier fluide pour entrer dans et sortir de ladite première chambre (8) en synchronisation avec la translation dudit piston (6);
la presse hydraulique étant **caractérisée en ce que** les membres (14) sont à même d'obstruer le passage quand lesdits plan de pression fixe (3) et plan de pression mobile (4) ont réalisé ladite position de fermeture (C),
et **en ce qu'**elle comporte:
des moyens de compression (15) représentés par au moins une portion de ladite tige (9), présentant des sections de plus grande surface que la portion restante de ladite tige (9), de telle sorte qu'une augmentation de pression dans ledit premier fluide (18) contenu à l'intérieur de ladite première chambre (8) correspond à la translation de ladite tige (9) par rapport audit piston (6), les moyens de compression (15) étant destinés - suite à l'obstruction du passage dudit premier fluide (18) entre ladite première chambre (8) et le réservoir (7) par les membres (14) et suite à la translation correspondante de ladite tige (9) par rapport audit piston (6), en contraste avec lesdits moyens élastiques (12) - à créer une augmentation de pression dudit premier fluide (18) contenu à l'intérieur de ladite première chambre (8) après que lesdits plan de pression fixe (3) et plan de pression mobile (4) aient réalisé ladite position de fermeture (C).

2. La presse hydraulique selon la revendication 1, **caractérisée en ce que** ladite paroi, en association avec ladite tête externe (6a) dudit piston (6), détecte une seconde chambre (17) dans laquelle débouche ledit trou (16), et **en ce que** lesdits moyens élastiques (12) sont situés entre l'extrémité libre de ladite tige (9) et la surface interne de ladite tête (6a).

3. La presse hydraulique selon la revendication 2, **caractérisée en ce que** lesdits moyens élastiques (12) sont représentés par un fluide contenu à l'intérieur de ladite seconde chambre (17) et la translation correspondante de ladite tige (9) par rapport audit piston (6), après que lesdits plan de pression fixe (3) et plan de pression mobile (4) aient réalisé ladite position de fermeture (C), obtenue grâce à un contraste élastique suite à une augmentation de pression dudit fluide à l'intérieur de ladite seconde chambre (17).

4. La presse hydraulique selon la revendication 2, **caractérisée en ce que** lesdits moyens élastiques (12) sont représentés par un fluide contenu à l'intérieur de ladite seconde chambre (17) et alimenté par un second réservoir, et **en ce qu'**elle comporte des éléments de réglage (19) situés dans une position fonctionnelle entre ladite seconde chambre (17) et un second réservoir, à même de maintenir la pression dudit fluide contenu à l'intérieur de la seconde chambre (17) à une valeur prédéfinie, la translation correspondante de ladite tige (9) par rapport audit piston (6), une fois que ladite position de fermeture (C) ait été réalisée par lesdits plan de pression fixe (3) et plan de pression mobile (4) grâce au contraste de la force de la pression exercée par ledit fluide à l'intérieur de ladite seconde chambre (17).

5. La presse hydraulique selon la revendication 4, **caractérisée en ce que** ledit réservoir (7) et le second réservoir ne font qu'un.

6. La presse hydraulique selon la revendication 4 ou 5, **caractérisée en ce que** ladite tige (9) sur la partie supérieure est équipé d'un embout (25), destiné à fermer les portions correspondantes de la surface inférieure de ladite seconde chambre (17), en causant l'entraînement dudit piston (6).

7. La presse hydraulique selon la revendication 1, **caractérisée en ce que** lesdits moyens de compression (15) sont représentés par moins un épaulement réalisé dans ladite tige (9), de telle sorte qu'une augmentation de pression dudit premier fluide (18) contenu à l'intérieur de ladite première chambre (8) correspond à la translation correspondante de ladite tige (9) par rapport audit piston (6), après que lesdits plan de pression fixe (3) et plan de pression mobile (4) aient réalisé ladite position de fermeture (C).

8. La presse hydraulique selon la revendication 1, **caractérisée en ce que** lesdits moyens d'actionnement (13) sont représentés par un moteur de type brushless, et **en ce qu'**elle présente des moyens (20), situés dans une position fonctionnelle entre ledit moteur (13) et la tige (9), et capables de transformer le mouvement de rotation appliqué à cette dernière en un mouvement de translation.

9. La presse hydraulique selon la revendication 8, **caractérisée en ce que** lesdits moyens (20) de transformation du mouvement, sont représentés par une vis (21), entraînée en rotation par ledit moteur (13), et par un écrou (22) avec lequel ils sont accouplés, contraints contre ladite tige (9).

10. La presse hydraulique selon la revendication 1, **caractérisée en ce que** ladite paroi appartient à ladite tête externe (6a) dudit piston (6).
